# EUROPEAN PATENT APPLICATION

(11) **EP 3 081 793 A1**
(43) Date of publication of application: **19.10.2016**
(21) Application number: 16164896.9
(22) Date of filing: 12.04.2016
(51) Int. Cl.: F02D 41/00, F02D 41/40, F02D 41/02, F02D 41/14

(54) **VEHICLE HAVING ENGINE CONTROL SYSTEM WITH POWER BOOST IN RESPONSE TO TORQUE DEMAND**

(30) Priority: 14.04.2015 US 201514686110
(71) Applicant: Deere & Company, Moline, IL 61265 (US)
(72) Inventor: Klingaman, Robert W, Waterloo, IA Iowa 50701 (US); Kumar, Praveen, Waterloo, IA Iowa 50702 (US)
(74) Representative: Dehnhardt, Florian Christopher

(57) **Abstract**

An engine system configured to adjust an output torque generated by the engine system in response to anticipated changes in a condition of a load. The engine system includes a load predictor, an air supply system, a fuel supply system, and an electronic control unit. The electronic control unit is configured to adjust the quantity of air and/or exhaust provided to an inlet manifold of an engine and to thereafter adjust the quantity of fuel delivered to the engine for a predetermined period of time. The delivery of the quantity of fuel is delayed from the adjustment to the quantity of air and/or exhaust to provide a torque boost responsive to the anticipated changes in the condition of the load. Fuel costs are reduced and the engine operates more smoothly in response to load changes.

## Description

The present invention generally relates to a vehicle having a prime mover to provide power to the vehicle, and more particularly to an engine control system including a power boost in response to torque demand.

Agricultural equipment, such as a tractor or a self-propelled combine-harvester, includes a prime mover which generates power to perform work. In the case of a tractor, the prime mover is gas powered engine or a diesel engine that generates power from a supply of fuel. The engine drives a transmission which moves wheels or treads to propel the tractor across a field. In addition to providing power to wheels through a transmission, tractors often include a power takeoff (PTO) which includes a shaft coupled to the transmission and which is driven by the engine.

In both gas powered and diesel powered engines, the amount of work performed not only includes moving the vehicle along a road or field, but delivering power to a wide variety of accessories driven by the engine and often by the PTO. The PTO of agricultural equipment drives what is known as farm implements or attachments including discs, spreaders, combines, or bailers. Some work vehicles include a hydraulic machine having a hydraulic pump which can be used, for instance, to raise or lower a piece of equipment such as a mower. In other embodiments, the PTO can be coupled to a number of different types of equipment, including but not limited to log splitters, pumps, concrete mixers, mulchers, chippers, balers, harvesters, spreaders, and sprayers.

Other work vehicles having prime movers include construction vehicles, forestry vehicles, lawn maintenance vehicles, as well as on-road vehicles such as those used to plow snow, spread salt, or vehicles with towing capability. While each of the work vehicles, including the agricultural equipment described above, often include gas powered combustion engines as the prime mover, many of the work vehicles use diesel engines, due in part to the higher torque available from a diesel engine.

In addition to work vehicles, work machines include engines which respond to torque demands resulting from a machine operation. For instance, a forestry saw experiences an almost instantaneous torque load when beginning a cut. The work machine or work vehicle driving the saw must respond appropriately to the immediate requirement for the increased torque demand.

Current engines include a large number of complex control systems directed to controlling airflow into and out of the engine, as well as to controlling the amount of fuel delivered to the engine under varying conditions. Because power from the engine must be provided not only for moving the vehicle, but for powering other equipment or accessories as well, the design of engine systems, including engine control systems, are configured to respond to load demands of all types including those which are either steady state or transient in nature. Consequently, the demands for a work vehicle to deliver power requires that the engine responds appropriately to the power demands, resulting from a torque demand required by a load or a torque demand resulting from a change in vehicle speed experienced by a vehicle transmission.

Significant challenges exist in an engine system where engine control systems must respond to continuously changing torque demands while still meeting engine system requirements, such as fuel consumption requirements, pollution control system demands, and sufficient power delivery. Prior engine system designs have responded to torque demands by providing a torque boost at the appropriate time to response to increased torque demands. For instance, some engine systems include systems which deliver an increased airflow into the engine at the appropriate time with either a turbocharger or supercharger. These systems include certain disadvantages such as increased system complexity both from a hardware perspective as well as from a control system perspective. Because these systems are necessarily more complex, a significant cost increase results. What is needed, therefore, is an engine system which responds to continuous and transient torque demands without significant cost increases, while still meeting engine system requirements.

In one embodiment, there is provided an engine system including an engine for generating a force to drive a load. The engine system includes a load predictor, an air supply system, a fuel supply system, and an electronic control unit. The load predictor is configured to anticipate a change in a condition of the load and is configured to generate a load predictor signal indicative of the anticipated change in the condition of the load. The air supply system is operatively connected to the engine, and is configured to adjust a quantity of air delivered to the engine. The fuel supply system is operatively connected to the engine and is configured to adjust a quantity of fuel delivered to the engine. The electronic control unit is operatively coupled to the load predictor, the air supply system, and the fuel supply system, wherein the electronic control unit is configured to generate an air adjustment signal and a fuel adjustment signal in response to receipt of the load predictor signal. The air adjustment signal is configured to adjust the quantity of air delivered to the engine at a first time and the fuel adjustment signal being configured to adjust the quantity of fuel delivered to the engine at a second time delayed from the first time.

In another embodiment, there is provided a method of controlling an amount of torque being generated by an engine of a work machine in response to a load condition wherein the work machine includes an engine controller, a load predictor, an engine air system actuator, and a fuel system fuel actuator. The method includes: (i) transmitting a load predictor signal from the load predictor to the engine controller, the load predictor signal configured to indicate an anticipated change in a load condition; (ii) transmitting an air system actuator signal from the engine controller to the engine air system actuator in response to the transmitted load predictor signal; (iii) transmitting a fuel system actuator signal from the engine controller to the fuel system fuel actuator in response to the transmitted load predictor signal; (iv) adjusting the air system actuator in response to the transmitted air system actuator signal at a first time; (v) adjusting a first setpoint of the fuel system fuel actuator to a second setpoint at a second time delayed from the first time, in response to the transmitted fuel system actuator signal; (vi) changing the condition of the load substantially simultaneously with the adjusting at the second time of the fuel system fuel actuator; and (vii) after a predetermined period of time, changing the second setpoint of the fuel system actuator to a third setpoint different than the second setpoint.

The above-mentioned aspects of the present invention and the manner of obtaining them will become more apparent and the invention itself will be better understood by reference to the following description of the embodiments of the invention, taken in conjunction with the accompanying drawings, wherein:
FIG. 1 is a side perspective view of a work machine.
FIG. 2 is a simplified schematic diagram of a vehicle and a control system embodying the invention.
FIG. 3 is a schematic diagram of an engine system configured to provide a torque under different load conditions.
FIG. 4 is a graph of a torque response over time.
FIG. 5 is a graph of an air system response over time and fuel injection timing.
FIG. 6 is a graph of injected fuel mass per engine cycle over time.
FIG. 7 is a flow diagram of a method to adjust engine torque.
FIG. 8 is a prior art graph illustrating an air system response over time and fuel injection timing.
FIG. 9 is a prior art graph of injected fuel mass per engine cycle over time.

For the purposes of promoting an understanding of the principles of the novel invention, reference will now be made to the embodiments described herein and illustrated in the drawings with specific language used to describe the same. It will nevertheless be understood that no limitation of the scope of the novel invention is intended. Such alterations and further modifications of the illustrated apparatus, assemblies, devices and methods, and such further applications of the principles of the novel invention as illustrated herein, are contemplated as would normally occur to one skilled in the art to which the novel invention relates.

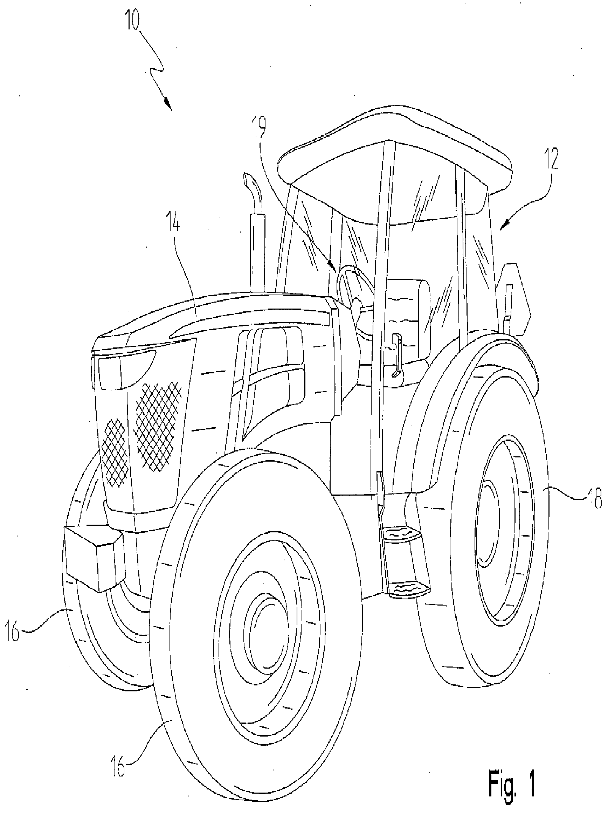

The present disclosure is not exclusively directed to any type of machine or tractor, but rather extends to other powered vehicles as well. For exemplary and illustrative purposes, the present disclosure focuses on a utility tractor 10. In FIG. 1, for example, a work machine 10 includes a cab 12 where an operator controls the operation of the machine 10. The machine 10 includes an outer frame 14 to which a front and rear axle (not shown) are connected. The front axle engages a pair of front ground engaging means 16 (e.g., wheels) mounted thereto and the rear axle engages a pair of rear ground engaging means 18 (e.g., wheels) mounted thereto. Operator controls 19, such as a steering wheel, shift lever, shift buttons, dashboard display, etc., are disposed in the cab 12. One or more of these operator controls 19 is operably coupled to the machine's drive train (not shown) for controlling the operation of the machine 10.

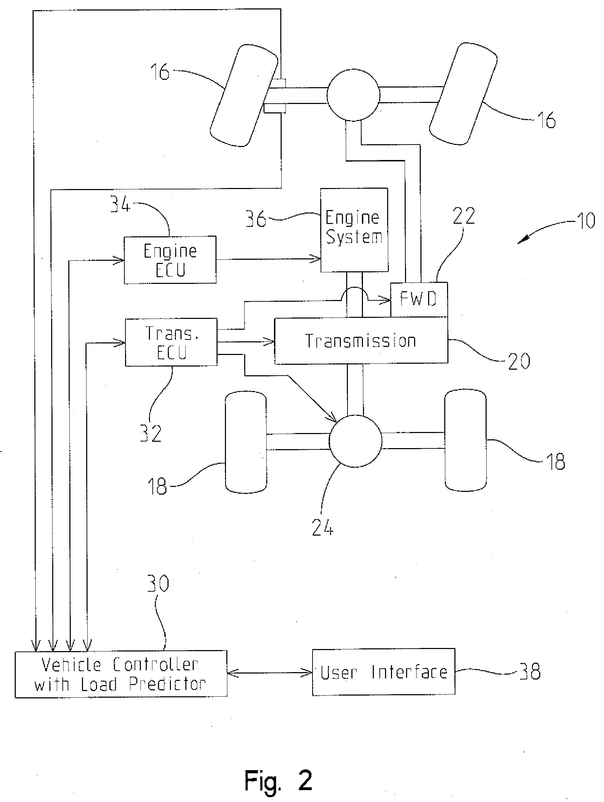

FIG. 2 is a simplified schematic diagram of the vehicle 10 and a control system embodying the invention. A transmission 20 includes an electronically controlled front wheel drive control unit 22 and an electronically controlled differential lock control unit 24. The front wheel drive control unit 22 is coupled to the steerable front wheels 16. When the front wheel drive control unit 22 is on, torque is transmitted from the transmission 20 to the front wheels 16. When the front wheel drive control unit 22 is off, torque is not transmitted from the transmission to the front wheels 16.

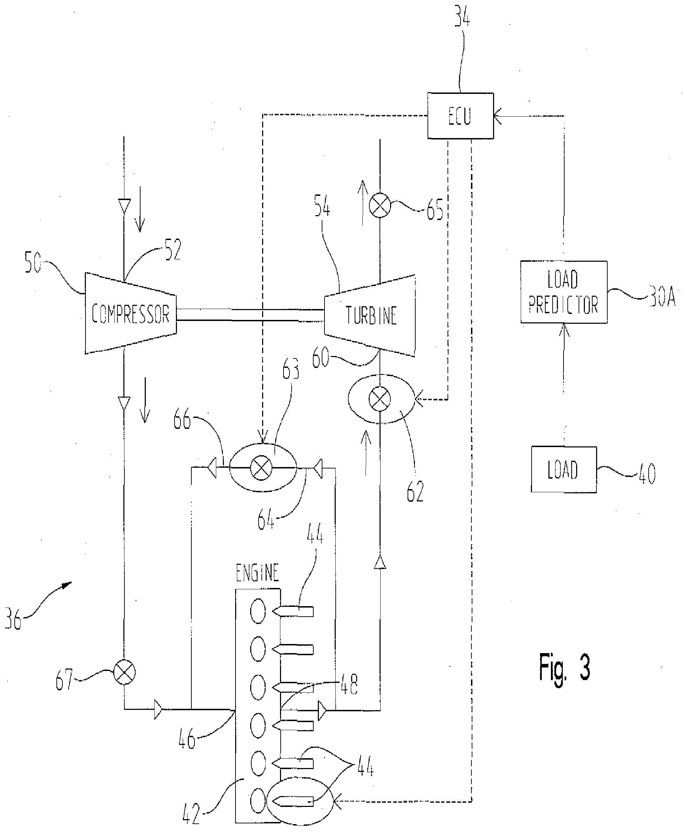

A vehicle controller 30 communicates with a transmission electronic control unit ECU 32 and with an engine ECU 34. The vehicle controller 30 includes a load predictor 30A as described herein. See FIG. 3.

Transmission ECU 32 controls the transmission 20 and provides control signals to the front wheel drive control unit 22 and to the differential lock control unit 24. The engine ECU 34 controls an engine system 36. A user interface 38 is connected to the main vehicle controller 30. The user interface in different embodiments includes manually actuatable controls such as levers or buttons configured to control the operation of the tractor, such as an accelerator, or a lever to control the operation of the PTO. In other embodiments, the user interface 38 includes electrical or electronic user interface controls such as a touch sensitive screen configured to control operation of the tractor including acceleration and control of the PTO. In other embodiments, the user interface 38 includes a combination of manually actuatable controls and electrical/electronic controls. The use interface 38 is located on the tractor for ease of access by a user, typically in the cab 12.

The vehicle controller 30, in different embodiments, includes a computer, computer system, or programmable device, e.g., multi-user or single-user computers. In other embodiments, the vehicle controller 30 can include one or more processors (e.g. microprocessors), and the associated internal memory including random access memory (RAM) devices comprising the memory storage of the vehicle controller 30, as well as any supplemental levels of memory, e.g., cache memories, non-volatile or backup memories (e.g. programmable or flash memories), read-only memories, etc. In addition, the memory can include a memory storage physically located elsewhere from the processing devices and can include any cache memory in a processing device, as well as any storage capacity used as a virtual memory, e.g., as stored on a mass storage device or another computer coupled to vehicle controller 30. Each of the transmission ECU 32 and engine ECU 34, in different embodiments, includes one or more of the above described components and features.

FIG. 3 illustrates a schematic diagram of the engine system 36 configured to provide a torque to move or drive a load 40 under different load conditions. In different embodiments, the load includes a load being driven by the PTO, a loader bucket, and loads experienced by the transmission 20, such as changes in wheel angle, changes in ground elevation, or changes in speed resulting from user inputs through the user interface 38. Load driven by the PTO include farm implements such as plows and harvesters as well as water or oil pumps. These examples, however, are not, considered to be limiting and other loads experienced by the work vehicle are included.

The load predictor 30A illustrated in FIG. 3 is embodied, in one embodiment, as part of the electronic control unit of FIG. 2, but in other embodiments the load predictor 30A is a standalone controller configured to determine an anticipated occurrence of load or a change in the load. For instance, if the user directs the work vehicle to accelerate with an acceleration command, the load predictor 30A determines that the load experienced by the transmission will change, once the transmission ECU 32 determines how the transmission will respond to the change in vehicle speed. Consequently, for instance, if the transmission ECU 32 determines that a change in gearing is to be made in response to the acceleration command, the load predictor transmits a signal to the engine ECU 34 to change the engine output, which drives the transmission 20 to accommodate the changing load.

The engine system 36 includes an engine 42, which is configured to receive a supply of fuel to power the engine. In the illustrated embodiment, the fuel is delivered to each of the engine cylinders by one of a plurality of fuel injectors 44. Each of the plurality of fuel injectors 44 are operatively connected to the ECU 34, which provides control signals to each of the fuel injectors. In particular, in the illustrated embodiment, each of the fuel injectors 44 is configured to respond to a fuel injection quantity signal and a fuel injection timing signal provided by the ECU 34. Consequently, each of the fuel injectors 44 is configured to deliver a determined amount of fuel at a determined time wherein the determined amount and determined time are provided by the control signals of the ECU 34.

The engine 42 includes an intake manifold 46 and an exhaust manifold 48, as is understood by those skilled in the art. The intake manifold 46 is coupled to a compressor 50 which intakes air (atmosphere) at a first intake 52 and forced exhaust from the exhaust manifold 48. The combined air and exhaust is delivered to the intake manifold 46, as is understood by those skilled in the art.

A turbine input 60 of the turbine 54 is coupled to the exhaust manifold 48 through a variable geometry turbocharger (VGT) vane 62 which is operatively connected to the ECU 34. The VGT vane 62, in different embodiments, is a part of the turbine 54 or is separate from the turbine. An output of the turbine 54 is coupled to an exhaust throttle 65 configured to control an exhaust of the turbine 54. The ECU 34 is operatively connected to and is configured to control the operation of the VGT vane 62 and the exhaust throttle 65 through control signals configured to adjust the position of the vane. An intake throttle 67 is coupled to an output of the compressor 50 and to the intake manifold 46. Consequently, by adjusting the position of the VGT vane 62, the exhaust throttle 65, and the intake air throttle 67, the amount of atmosphere and exhaust gas delivered to the intake manifold 46 is controlled. While both the exhaust throttle 65 and intake air throttle 67 are illustrated, some engine systems include only one of the exhaust throttle 65 and the intake air throttle 67, but not the other.

The engine system 36 further includes an exhaust gas recirculation (EGR) valve 63 having an input 64 coupled to the exhaust manifold 48 and an output 66 coupled to the intake manifold 46. The ECU 34 is operatively connected to and configured to control the operation of the EGR valve 63 through control signals configured to adjust the position of the valve 63. Consequently, by adjusting the position of the valve 63, the operation of the engine 42 is thereby controlled.

As shown in FIG. 3, each of the VGT vane 62, the EGR valve 63, and the fuel injectors 44 are conventional actuators, but the ECU 34 of the present invention is configured to control these actuators to provide a faster torque response while minimizing fuel injection quantity, and thereby reducing fuel consumption. To provide the improved engine system performance, the VGT vane 62, the EGR valve 63, and the fuel injectors 44 are strategically actuated synchronously with respect to one another. The information provided by the load predictor 30A is used by the ECU 34 to adjust the positions of the VGT vane 62, the EGR valve 63, and the fuel quantity delivered to and fuel injection timing of the fuel injectors 44 to generate a transient torque burst beyond the steady state torque capability of the engine 42.

To provide the faster torque response while minimizing fuel injection quantity, the fuel injectors are each actuated, in one embodiment, approximately 800 milliseconds (ms), for example, after the start of actuation of the VGT vane 62. This time delay is determined, in part, by the load predictor 30A and the receipt of a load prediction signal by the ECU 34. The load prediction signal determines the time at which the VGT vane 62, the EGR valve 63, and one of or both of the exhaust throttle 65 and the air intake throttle 67 are actuated. The fuel injectors are actuated approximately 800 milliseconds thereafter in one embodiment. Due to strategic actuation of VGT vane 62, the EGR valve 63, and one of or both of the exhaust throttle 65 and air intake throttle 67, the pumping losses through the injectors 44 are reduced. In one embodiment, the reduction of pumping losses results in a reduction of fuel quantity about 30% to meet the desired the torque/load requirement when compared to a conventional strategy. In addition, the fuel injection timing is also delayed, which leads to reduced peak firing pressures and which reduces pressure loads on internal combustion engine head and cylinder liners, heat losses, and nitrogen oxide (NOx) emissions while remaining within an end of injection limit.

In one embodiment, the EGR valve 63 is preferred as the flow control device over the VGT vane 62, such that the EGR valve 63 is actuated more, i.e. delivers less flow (closed more), when compared to VGT vane 62 actuation. By closing the EGR valve 63 more than the VGT vane 62, a higher exhaust flow is provided through the turbine 54 resulting in quicker turbine response leading to faster air boost build up. In one embodiment, an increase in air boost pressure prior to fuel injection takes about 0.6 second to reach a preferred pressure.

In addition to controlling the actuation of the VGT vane 62 and the EGR valve 63, the timing of the fuel injection, the quantity of fuel injected, and duration of the fuel injected over time are determined to generate a boost in torque, or a "torque burst" to provide a temporary boost in torque responsive to the predicted change in load.

In this torque burst strategy, the load predictor 30A provides a load anticipation feature which is used by the ECU 34 to pre-charge the air system, including the VGT vane 62 and the EGR valve 63. In one embodiment, the air system is precharged for a period of time of about zero seconds to three seconds. In another embodiment, the period of time for precharging is about 0.8-1 second. Once the air system is pre-charged, the ECU 34 generates a command signal to the fuel injectors providing about an additional amount of fuel for an approximately 20-30% torque burst, without exceeding engine limits.

The VGT vane 62 and EGR valve 63 are closed down to increase the intake manifold boost pressure and to pre-charge the system, while maintaining the engine delta pressure and the turbine inlet pressure below engine calibration limits. A fuel quantity is determined to provide a torque burst and to be injected by the injectors 44 while maintaining an air-fuel ratio leaner than typically found in a conventional strategy. This air-fuel ratio is greater than a stoichiometric mixture of 14.7. The air fuel ratio above stoichiometric enables additional fuel to be injected and results in better torque burst response and lower particulate emission generation. The additional fuel is injected with retarded timing to help minimizing the peak cylinder pressure and keep it under the peak firing pressure (PFP) limit, during the torque burst event.

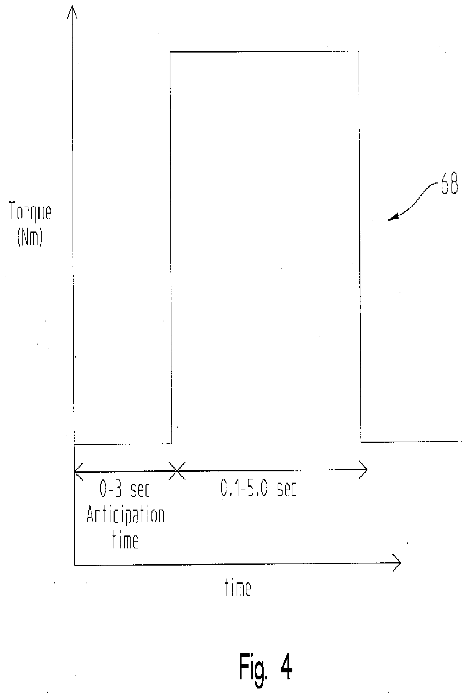

In one embodiment, as illustrated in FIG. 4, the additional fuel is injected to provide a torque square pulse 68 having a predetermined duration of .1 to 5.0 seconds using a quantity of fuel sufficient to provide the desired torque burst pulse 68, while still operating the engine within engine defined limits. In another embodiment, the torque square pulse 68 includes a predetermined duration of 200ms to 1.5 seconds. In still another embodiment, the pulse duration is approximately of 300ms. In addition to the duration of the torque square pulse 68 having a duration, the torque square pulse, in one embodiment, includes a torque burst frequency of approximately 20 bursts per hour.

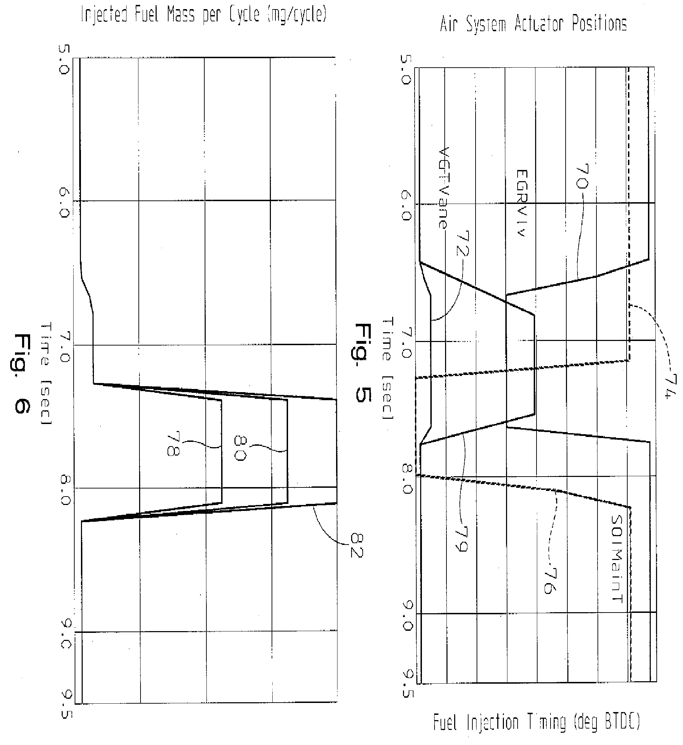

As described above the desired torque burst pulse 68 is achieved by adjusting the VGT vane 62, EGR valve 63, and the fuel injection timing with respect to one another. For one embodiment as illustrated in FIG. 5, air system actuator positions are shown over time and the fuel injection timing is shown as well over time. An EGR valve position 70 is shown with respect to the VGT valve position 72 over time. Each of the EGR valve 63 and the VGT vane 62 are actuated substantially simultaneously at about the 6.5 second mark. In one embodiment, for example, the EGR valve 63 is actuated more when compared to VGT vane 62 actuation as can be seen by the position of each before being actuated when compared to the position of each at the time the fuel injector begins to deliver fuel at point 74 of the fuel injector timing diagram 76. An air throttle position 79, one of either the exhaust throttle 65 and the intake air throttle 67, is illustrated with respect to the positions of the VGT vane and the EGR valve positions. To illustrate the relative positions of the VGT vane position 72, the EGR valve position 70, and the air throttle position 79 on the same graph, the EGR valve and air throttle positions are shown as being fully closed at the intersection of the X axis and the Y axis, and being fully open at the maximum value of the Y axis. This is in contrast to the position of the VGT vane as illustrated, which is shown as being fully open at the intersection of the X axis and the Y axis and being fully closed at the maximum value of the Y axis. As further seen in FIG. 5, the delay between the actuation of the EGR valve 63 and the start of fuel injection is about .8 seconds. The duration of the injection of fuel is about .8 seconds. As described above, however, these values are examples which fall within a range.

FIG. 6 illustrates 3 different embodiments of an injected fuel mass per cycle in milligrams per cycles over time to be delivered to the engine 42 by the injectors 44. As illustrated, a first fuel mass 78, a second fuel mass 80, and a third fuel mass 82 are each configured to provide a different fuel quantity sufficient to achieve a torque boost to thereby respond to a predicted change in the load. Each of the fuel masses 78, 80, and 82 results in a torque burst of 20%, 25% and 30% respectively. In each of the delivered fuel masses 78 and 80, all engine limits are maintained. Even with the torque burst of 30% corresponding to the third fuel mass 82, a peak firing pressure limit of the engine 42 was exceeded by 5 bar for a brief period of 200 milliseconds, without adverse consequences. Under certain conditions, exceeding PFP limits for these brief periods of time may be acceptable. Consequently, in one embodiment, the ECU 34 is configured to apply a torque burst which operates the engine generally within the PFP limits, but under circumstances applies a torque burst exceeding the PFP limits to accommodate certain anticipated but infrequently occurring loads.

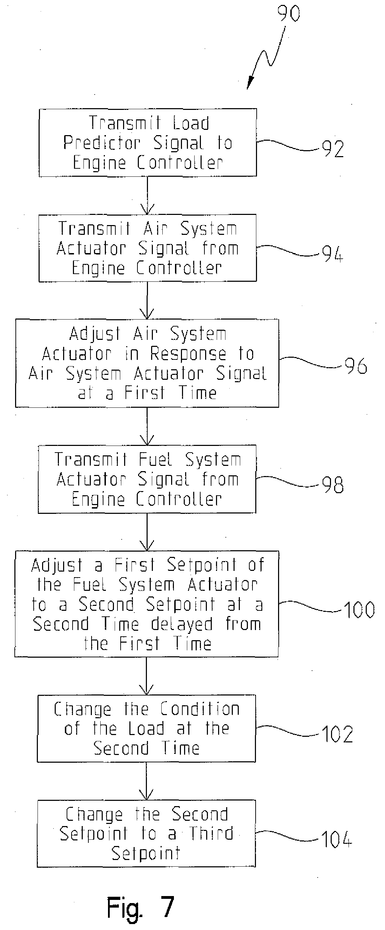

FIG. 7 is a flow diagram 90 of a method to adjust engine torque output to respond to anticipated or predicted loads. In operation, at block 92 the load predictor 30A transmits a load predictor signal to the ECU 34, the content of which indicates to the ECU 34 that a change in the load being experienced by the engine will change at a certain time in the future. Upon the receipt of the load predictor signal, at block 94 the ECU 34 generates an air system actuator signal configured to direct one of, some of, or all of the VGT vane 62, the EGR valve 63, the exhaust throttle 65, and the air throttle 67 to adjust the flow or exhaust being delivered to the intake manifold 46 as described herein. At block 96, at least one of the air system actuators VGT 62, EGR 63, exhaust throttle 65, and the intake air throttle 67 is adjusted in response to the air system actuator signal at a first time. Additionally, after adjustment of one, some or all of the air system actuators, the ECU 34 transmits a fuel system actuator signal at block 98 which is configured as described above. After adjustment of the fuel system actuator to a first setpoint has occurred, the first setpoint of the fuel system actuator is adjusted to a second setpoint, at a second time delayed from the first time at block 100. At this time, a burst of fuel is delivered and delayed from the first time, such as shown in FIG. 5, to provide a torque burst as shown in FIG. 4. In response to the fuel injected to the engine at block 102, at block 102 the engine changes the condition of the load whose predicted change in condition was determined by the load predictor 30A. Once the torque burst is complete, the second setpoint of the fuel delivered by the fuel injectors is changed to a third setpoint configured to accommodate the new load condition at block 104. Depending on the new load condition, the third setpoint is different under some circumstances and is the same as the second setpoint under other circumstances.

While the described embodiments are applicable to engine systems experiencing a wide variety of load changes, the described system is particularly applicable to engines experiencing load changes resulting from transmission shifting in response to changes in speed or acceleration of the vehicle. For instance, in one embodiment, during engine operation on a torque curve with increasing load, the described embodiments are configured to provide a 20-30% burst of additional torque required during a downshift to prevent the engine speed from dropping excessively and causing harsh transmission speed shifts. Conventional torque burst strategy cannot provide the torque burst shape for adequate transmission shifts, without exceeding engine parameters limits.

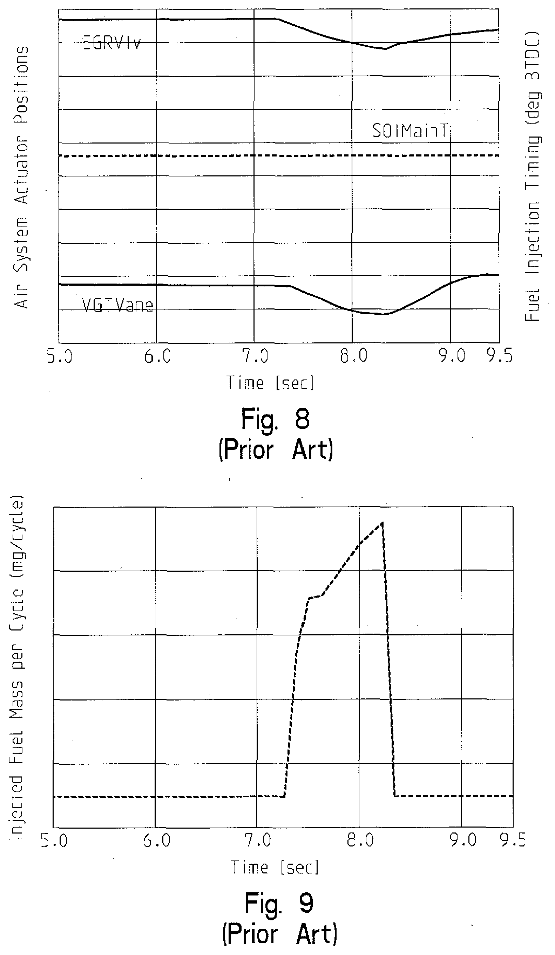

As shown in the prior art graph of FIG. 8 for instance, an EGR valve and a VGT vane are adjusted substantially simultaneously by the same amount for the same duration in a conventional system. In addition, the time at which the fuel is injected to the engine remains constant during the times at which the EGR valve and VGT vane are adjusted. As further seen in FIG. 9, the injected fuel mass per cycle continually increases until the fuel delivery is completed.

In the prior art torque burst calibration strategy of FIGS. 8 and 9, the engine operates in a dosed loop diluent air ratio (DAR) and fuel-air ratio (FAR) control by utilizing actuators i.e., intake throttle, EGR valve, VGT vane. At the time of an increased torque request, a proportional fuel quantity is injected until the air-fuel ratio (AFR) reaches a controller set point limit calibrated control limit which may be at or greater than 14.7 (stoichiometry), causing a gradually increasing fuel rate rather than a step change in fuel rate as described herein. Because of the increasing fuel injection ramp shape, the generated torque shape of FIG. 9 results in an increasing ramp which is insufficient to provide an improved adjustment of engine torque output. In the case of a shift in a transmission, the increasing fuel ramp of FIG. 9, does not provide an improved shift capability which prevents engine speed from dropping excessively and which would prevent harsh transmission speed shifts.

The torque burst shape and the transient response of the engine systems with the disclosed strategy are improved, leading to better shift quality for a transmission particular with respect to a tractor which often experiences more frequent load disruptions. Additionally, the described strategy reduces fuel consumption during shifting by about 25-35%. The savings in fuel also enables the present invention to retard the fuel injection timing which reduces peak firing pressures thereby reducing pressure loads an on internal combustion engine head and cylinder liners. The reduced pressure loads further reduce head losses, reduce NOx emissions, while still remaining within an end of ejection limit.

While exemplary embodiments incorporating the principles of the present invention have been disclosed herein, the present invention is not limited to the disclosed embodiments. Instead, this application is intended to cover any variations, uses, or adaptations of the invention using its general principles. For instance, the present disclosure is applicable to locations where relative displacements between parts is advantageous, while still achieving robust designs at the joint of or interface between parts. In the absence of the teachings of this disclosure, other less robust methodologies would be required which generally do not enable relative displacements to occur. Consequently in those less robust methodologies, parts or components are joined together in a way that prevents relative movement between those parts of components, thereby leading to high risk of component failures due to elevated component strains. Therefore, this application is intended to cover such departures from the present disclosure as come within known or customary practice in the art to which this invention pertains.

## Claims

1. An engine system including an engine for generating a force to drive a load, comprising:
a load predictor configured to anticipate a change in a condition of the load, the load predictor configured to generate a load predictor signal indicative of the anticipated change in the condition of the load;
an air supply system operatively connected to the engine, the air supply system configured to adjust a quantity of air delivered to the engine;
a fuel supply system operatively connected to the engine, the fuel supply system configured to adjust a quantity of fuel delivered to the engine
an electronic control unit, operatively coupled the load predictor, the air supply system, and the fuel supply system, wherein the electronic control unit is configured to generate an air adjustment signal and a fuel adjustment signal in response to receipt of the load predictor signal, the air adjustment signal being configured to adjust the quantity of air delivered to the engine at a first time and the fuel adjustment signal being configured to adjust the quantity of fuel delivered to the engine at a second time delayed from the first time.

2. The engine system of claim 1 wherein the fuel adjustment signal is configured to adjust the quantity of fuel as an impulsed quantity of fuel having a substantially immediate transition from a first fuel quantity to a second fuel quantity wherein the second fuel quantity is substantially the same quantity over a predetermined period of time and subsequent to the predetermined period of time the quantity of fuel returns to around the first fuel quantity.

3. The engine system of claim 2 wherein the fuel adjustment signal is configured to adjust the quantity of fuel as the impulsed quantity of fuel having a substantially immediate transition from the first fuel quantity to the second fuel quantity wherein the second fuel quantity is substantially the same quantity over a predetermined period.

4. The engine system of claim 1 wherein the air supply system includes an exhaust gas recirculation valve operatively connected to an intake of the engine and an exhaust output of the engine, wherein the air adjustment signal is configured to adjust the exhaust gas recirculation valve in response to the load predictor signal.

5. The engine control system of claim 4 wherein the fuel supply system includes at least one fuel injector configured to deliver a timed quantity of fuel into the engine, the at least one fuel injector operatively connected to the electronic control unit and configured to provide the timed quantity of fuel in response to the fuel adjustment signal provided by the electronic control unit.

6. The engine control system of claim 5 wherein the air supply system includes a turbocharger system operatively connected to the intake of the engine and the exhaust output of the engine, wherein the air adjustment signal is configured to adjust the turbocharger system in response to the load predictor signal.

7. The engine control system of claim 1 wherein the air supply system includes a turbocharger system operatively connected to the intake of the engine and the exhaust output of the engine, wherein the air adjustment signal is configured to adjust turbocharger system in response to the load predictor signal.

8. The engine control system of claim 7 wherein the fuel supply system includes at least one fuel injector configured to deliver a timed quantity of fuel into the engine, the at least one fuel injector operatively connected to the electronic control unit and configured to provide the timed quantity of fuel in response to the fuel adjustment signal provided by the electronic control unit.

9. The engine system of claim 8 wherein the air supply system includes an exhaust gas recirculation valve operatively connected to an intake of the engine and an exhaust output of the engine, wherein the air adjustment signal is configured to adjust the exhaust gas recirculation valve in response to the load predictor signal.

10. The engine system of claim 1 wherein the air supply system includes an exhaust gas recirculation valve and a variable geometry turbocharger vane each operatively connected to an intake of the engine and an exhaust output of the engine, wherein the air adjustment signal is configured to adjust the exhaust gas recirculation valve and the variable geometry turbocharger vane in response to the load predictor signal, wherein the fuel adjustment signal is configured to adjust the quantity of fuel delivered to the engine at a second time delayed from the first time by a period of time from about zero to three seconds or by a period of time from about .6 second to one second.

11. The engine system of claim 10 wherein the fuel adjustment signal is configured to adjust the quantity of fuel as an impulsed quantity of fuel having a substantially immediate transition from a first fuel quantity to a second fuel quantity wherein the second fuel quantity is substantially the same quantity over a predetermined period of time and subsequent to the predetermined period of time the quantity of fuel returns to around the first fuel quantity.

12. A method of controlling an amount of torque being generated by an engine of a work machine in response to a load condition, the work machine including an engine controller, a load predictor, an engine air system actuator, and a fuel system fuel actuator, the method comprising:
transmitting a load predictor signal from the load predictor to the engine controller, the load predictor signal configured to indicate an anticipated change in a load condition;
transmitting an air system actuator signal from the engine controller to the engine air system actuator in response to the transmitted load predictor signal;
transmitting a fuel system actuator signal from the engine controller to the fuel system fuel actuator in response to the transmitted load predictor signal;
adjusting the air system actuator in response to the transmitted air system actuator signal at a first time;
adjusting a first setpoint of the fuel system fuel actuator to a second setpoint at a second time delayed from the first time, in response to the transmitted fuel system actuator signal;
changing the condition of the load substantially simultaneously with the adjusting at the second time of the fuel system fuel actuator; and
after a predetermined period of time, changing the second setpoint of the fuel system actuator to a third setpoint different than the second setpoint.

13. The method of claim 12 wherein the engine system actuator includes an exhaust gas recirculation valve, a turbocharger, and a variable geometry turbocharger vane, and the adjusting the air system actuator includes adjusting the exhaust gas recirculation valve and the variable geometry turbocharger vane substantially at the same time.

14. The method of claim 13 wherein the adjusting the exhaust gas recirculation valve includes adjusting the exhaust gas recirculation valve to a more closed position to enable additional exhaust flow through the turbocharger.

15. The method of claim 14 wherein the adjusting the first setpoint of the fuel system fuel actuator to the second setpoint at a second time includes adjusting the second setpoint to provide an impulse fluid flow to one or more fuel injectors operatively connected to fuel system fuel actuator.
